# EUROPEAN PATENT APPLICATION

(11) **EP 1 939 108 A1**
(43) Date of publication of application: **02.07.2008**
(21) Application number: 07075808.1
(22) Date of filing: 13.09.2007
(51) Int. Cl.: B65D 77/04

(54) **Protective crate for containers**

(30) Priority: 29.12.2006 IT MC20060181
(71) Applicant: O.M.C.E. di Rocchetti Amleto S.p.A., 60010 Ripe (AN) (IT)
(72) Inventor: Rocchetti, Giovanni, Frazione Brugnetto, 60010 Ripe (AN) (IT)
(74) Representative: Baldi, Claudio

(57) **Abstract**

The present invention refers to a protective crate (1), particularly used for containers (10), comprising at least a structure similar to a crate or network structure obtained with vertical rods (3) arranged on the perimeter of the crate, in which the vertical rods perpendicularly intersect with at least one, preferably more loops (2) used to retain the said rods (3) with quadrangular section, while the loops (2) have a basically circular or rounded section.

## Description

The present invention relates to a protective crate for containers, especially for plastic containers on pallets, designed to contain and protect plastic containers for fluids, in particular, without limitation, containers of approximately 1,000 litre capacity with thin walls.

Crates of the aforementioned type are known and largely used in spite of several inconveniences.

Fluids, either for food consumption or industrial use, are amongst the goods that, in case of large quantities, are more difficult to transport, since they can be toxic or dangerous and they are characterised by a considerable weight, volume and high cost of the containers used to store and transport them in reasonably safe conditions.

The situation has recently changed, because the new synthetic materials offered by the industrial sector have started to be used for containers and tanks.

Inexpensiveness, resistance, lightness and pleasantness have been the winning factors: The new materials have started to be used for small or very small capacities, where they have completely replaced any other material, and their use was gradually extended to larger sizes. Beyond a certain threshold, however, due to the weight of the fluid, the material used for the container starts to deform and collapse: this is the reason why structural protective or reinforcing crates are arranged around plastic containers, specifically, without limitation, with 06 thickness and 1000x1200x1000 mm dimensions (this measure being considered a standard module by experts of the art), and provided with a top opening for the introduction of fluids, a lid and lower spillage valve, in order to protect the said containers against dynamic shocks, in normal handling conditions and in case of accidents.

The protective or reinforcing crates according to the known art, or some structural features of the same crates are disclosed in patent EP1357053, which describes a crate obtained with circular-section tubular elements arranged to form a grate around the container, in patent EP 0755863, which describes a crate with quadrangular-section tubular elements coupled by welding, and in patent EP 0370307, which describes a further executive embodiment of the crate for containers.

In general, the guiding principle of the known crates is that the grate that forms the crate is obtained by means of metal sections or tubular elements with the same section to simplify the connection of the horizontal tubular elements with the vertical ones.

Moreover, also in the presence of horizontal tubular elements arranged in belt-configuration around the vertical rods, the horizontal tubular elements are chosen with the same section as the tubular element that forms the vertical rod.

This involves a series of inconveniences, since the vertical rods and the horizontal rods that intersect to form the crate do not react to the same types of mechanical stress: the vertical rods must basically absorb the weight of one or more stacked containers and oppose the "swelling" of the container walls, while the horizontal rods that are typically mounted externally to the vertical rods must simply reduce the said "swelling".

Although it optimises the cost of raw materials for the crate, the production according to the known technique of crates with only one size or shape of the section or tubular element that forms the vertical and horizontal rods does not optimise the use of the section or the size of the section or tubular element for different types of stress, thus constraining the designer to adopt a "safety" choice and overdimension some sections of the crate, with excessive weight and cost of the crate compared to the real needs.

Obviously, by overdimensioning the structure of the tubular elements or sections of the crate according to the known technique, the crate will resist the stress, but will have an excessive weight and a "waste" of material in those sections where the mechanical load is considerably lower than the load they were designed for.

One of the main consequence of this inconvenience refers to the difficult handling of crates and containers, since typically each crate is anchored to a pallet, made of wood or other material, which is normally interfaced with the most common handling means for transportation purposes, being impaired by the excessive weight of the crate for the aforementioned reasons.

The present invention relates to a protective crate, especially for containers, designed to provide a simple, inexpensive solution to the drawbacks of traditional crates.

The crate according to the present invention has achieved the aforementioned purposes, being a protective crate, particularly used for containers, that comprises at least a structure similar to a crate or network structure obtained with vertical rods arranged on the perimeter of the crate, in which the vertical rods perpendicularly intersect with at least one, and preferably more loops used to retain the said rods which have a quadrangular section, while the loops have a basically circular or rounded section.

Practically, the crate according to the present invention provides for a series of vertical rods, used to retain the container, obtained from sections or tubular elements with quadrangular section, which intersect with horizontal rods with circular section, in belt-configuration around the vertical rods, with the loop that surrounds the vertical rods as a continuous loop. The loop is generated by a section or tubular element with circular section that is closed at a specific point.

The presence of two different types of section, with different shape and size, generates a crate that is especially designed for the specific use, without the material waste or overdimensioning that is typical of traditional crates. In fact, in the same load conditions, the circular section has a better resistance to the mechanical stress that is applied to the horizontal rods, and therefore can be advantageously provided with smaller dimensions, lower weight and lower cost compared to a quadrangular section mounted in the same position.

Furthermore, the circular section advantageously provides the easy closing of the loop, as described below.

According to the present invention, for each horizontal section the four horizontal rods are replaced by the quadrangular loop that has only one critical point, with belt-configuration.

The quadrangular loop shape allows for more uniform load distribution, using sections or tubular elements with lower section, weight and cost compared to the sections of the traditional technique, with only one connection point in the series of horizontal rods, in particular where the loop is closed.

Advantageously, the use of a section with circular section to form the retaining loop contributes to a more uniform discharge of loads on the loop itself, thus optimising sections and thicknesses. Moreover, according to the present invention, the sections, that is to say the circular section for the loop and the quadrangular section for the vertical rods, are the most suitable sections to withstand the mechanical loads exerted on the sections themselves, thus optimising the use of material.

Additionally, the presence of one or more loops with circular section simplifies the connection of the tubular element with circular section in the point where the loop is closed, because the circular section can be subjected to machining operations such as deep-drawing or rolling to reduce the section, providing the type of connection that will be explained in detail below.

The vertical rods are advantageously provided with quadrangular or square section, since it has been demonstrated that, based on the loads exerted on the same rods, the square section is the best section in terms of mechanical resistance.

This type of combination allows to obtain a crate with low weight, due to optimisation of materials and tubular elements, and consequently easy handling, together with high mechanical resistance and low cost.

Moreover, having a lower number of connection points, the connection of the horizontal stiffening rods reduces the cost and manufacturing complexity of the crate according to the present invention.

Advantageously, the crate of the invention provides total protection in all uses, since sections with different shape and thickness have been selected for rods and loops according to their different function in the network structure.

In particular, according to a preferred embodiment of the present invention for containers with approximately 1,000 litre capacity, 06 thickness and 1000x1200x1000 mm dimensions, a tubular element with square section, 18 mm sides and 0.8 mm walls, is used for vertical rods, since the said vertical rods are mainly designed to resist and oppose the orthogonal thrust on the sides or withstand axial loads, in addition to offer a guide and good support for the external surface of the container, which can be provided with vertical concavities on the same rods.

In particular, according to the preferred embodiment of the present invention, a tubular element with circular section, 18 mm diameter and 1 mm thickness, is used for the loop, being closed in quadrangular shape with rounded corners, acting as connection for the vertical rods and providing good torsional stiffness to the entire structure, improving butching and shock-resistance.

The circular section is also determined by the need to guarantee the maximum seal of the annular element, obtained by means of plastic deformation of the connection point. In fact, in the connection point of the loop, one of the ends, whose diameter is reduced, for example, by rolling, is inserted inside the other end and blocked by the strong interference created by multiple cylindrical punches that penetrate the material for some millimetres.

Advantageously, according to the present invention, the connection points between vertical rods and retaining loop are obtained by means of welding, in particular resistance welding, without addition of material.

To improve welding and optimise the resistance characteristics to mechanical stresses in the connection points, vertical rods and/or retaining loops, cavities are provided to generate protruding folds of material.

In particular, according to a preferred embodiment, the cavity on the quadrangular tubular element that forms the vertical rod, is a quadrangular cavity with rounded corners and a predetermined preferred penetration inside the section or quadrangular tubular element, while the cavity on the tubular element that forms the retaining loop is a cavity shaped as an elongated rectangular polygon with four pronounced vertexes and two concave grooves on the longitudinal axes.

This type of section generates four exact contact areas between the circular tubular element and the quadrangular tubular element, improving coupling by welding. The improvement is related to the fact that very reduced areas of the two elements are brought in contact for coupling, and that in these areas or exact contact zones the temperature raises until the melting point of the material following to the application of electrical current. A suitable mechanical pressure determines the stable penetration and union of the two elements.

According to the preferred embodiment, the crate has two loops on the upper and lower border of the lateral walls. Advantageously, the upper and/or lower ends of the vertical rods are deformed, that is to say tapered by extending and enlarging the same side of the section with the cavities, in such a way that the upper end and/or the lower end have at least one, preferably three folds of material to provide a more stable union by welding with the upper or lower loop. This is necessary because in the ending section of the rods a T-shaped union is obtained between the vertical rod and the loop, and not a X-shaped union as it occurs on the loops that are not the first and/or the last loop or upper or lower loop, that is to say in the intermediate loops. Because of the special shape of the sections and tapered ends, according to the aforementioned preferred embodiment, one, two or more, preferably six exact contact areas are produced in each connection point between a vertical rod and first/last horizontal loop. Because of this, the connection of the lower and upper ending borders of the crate according to the present invention is resistant and sturdy, thus providing an excellent reaction to the stress that may occur during handling and during the static operation of the container housed in the crate.

Alternatively, the crate of the invention may be used to contain loose goods of any shape or size, instead of a plastic container, as long as compatible with the crate, without leaving the protective scope and the precepts of the present invention.

Similarly, the precepts and the protective scope of the present invention apply to crates of any shape and size and, although only the executive preferred example of crate with basically parallelepiped shape is illustrated for convenience purposes, experts of the art may transfer the said precepts to crates with any shape and size, without leaving the protective scope and the precepts of the present invention.

Further characteristics are the object of the enclosed claims and subclaims.

The present invention will be better understood with reference to the enclosed drawings, whereby:
- fig. 1 is a view of the crate according to the present invention;
- fig. 2 is a sectional view of the connection point of the loop with an axial plane;
- fig. 2A is a sectional view of the connection point of the loop with a transversal plane;
- figs. 3 and 4 are two isometric views of the connection between rod and loop;
- figs. 5, 6 and 7 are sectional views of the ending section of the vertical rod with tapering according to the present invention;
- figs. 8, 9 and 10 are a view of the cavity on the circular tubular element that forms the loop;
- figs. 11, 12 and 13 are a view of the cavity on the quadrangular tubular element that forms the rod;

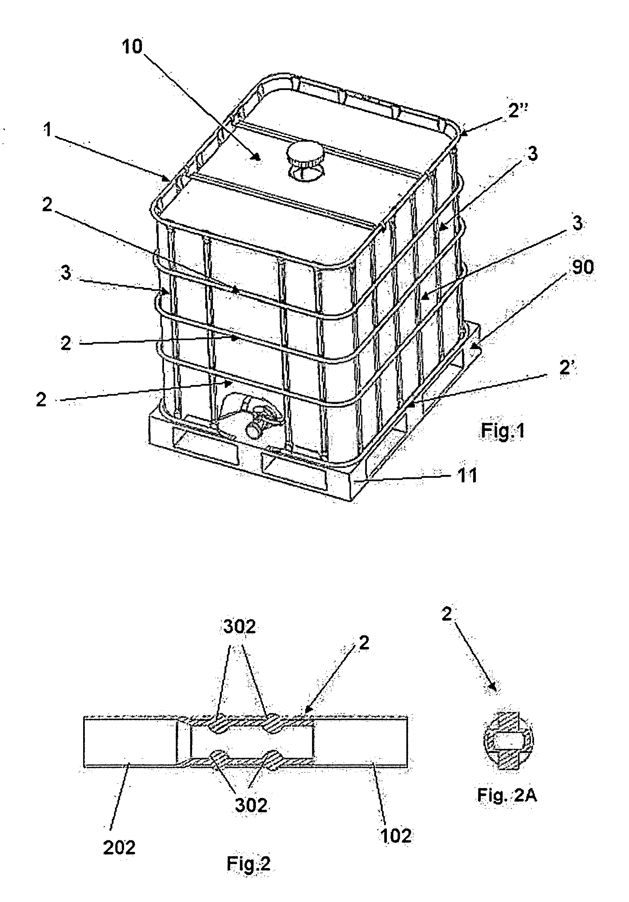

With reference to figure 1, the present invention relates to a protective crate (1), particularly used for containers (10), comprising at least a structure similar to a crate or network structure obtained with vertical rods (3) arranged on the perimeter of the crate, in which the vertical rods perpendicularly intersect with at least one, and preferably more loops (2) used to retain the said rods (3) with quadrangular section and/or the loop/s (2) have a basically circular or rounded section.

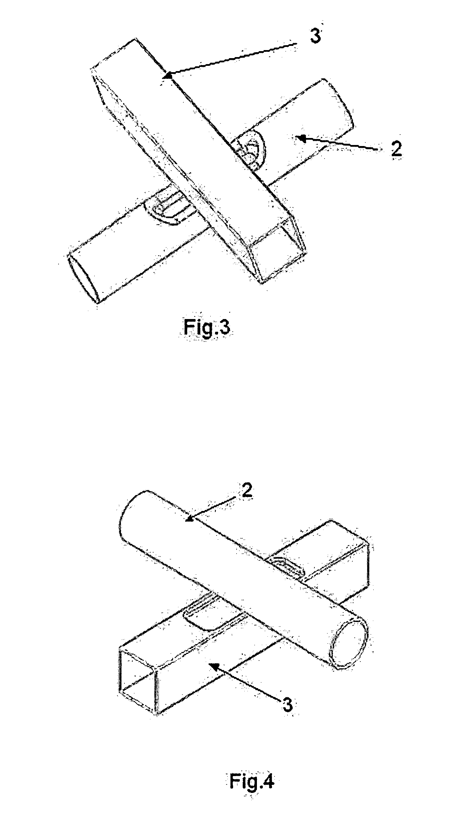

In particular, as shown in figures 3, 4, 11, 12, and 13, the rods (3) are basically tubular elements with quadrangular section that are coupled to one or one series of retaining loops (3) obtained with a tubular element with circular section, as shown in figures 3, 4, 8, 9, 10, being the said retaining loop wrapped around the vertical rods in belt configuration.

This type of combination between a vertical rod composed of a tubular element with quadrangular section and a horizontal loop obtained with a tubular element with circular or round section allows to obtain a crate with low weight, due to optimisation of materials and tubular elements of the crate, and consequently easy handling, together with high mechanical resistance and low cost.

According to the executive example illustrated in the aforementioned figures, the retaining crate has, without limitation, a basically quadrangular or rectangular shape, although it may also have other shapes, according to the specific constructive needs.

Advantageously, the retaining loop (2) is obtained by means of a tubular element with round section shaped as a loop or quadrangular belt, in case of a quadrangular crate as illustrated. The tubular element that forms the loop (2) is closed by means of the plastic deformation of the connection point between the ends of the tubular element on the connection point, as illustrated in fig. 2.

In particular, as shown in the aforementioned figure, the diameter of one of the two ends (202) is reduced and inserted into the other end (102) and further blocked in place by means of mechanical constraints (302); in a preferred executive embodiment the said mechanical constraints (302) for the mutual blocking of the two ends of the said tubular element that form the loop are at least one, preferably more than one, in particular eight cylindrical punches for crimping or edge-forming. The diameter reduction of the end of the said tubular element with round section is preferably obtained by roll forging the end.

The connection points between vertical rods and retaining loop are obtained by means of welding, in particular resistance welding, without addition of material.

To improve welding and optimise the mechanical connection characteristics of the vertical rods and the retaining loop, in the connection points the vertical rods (3) and/or the retaining loops (2) are provided with cavities that generate protruding bends of material.

When analysed in detail, the cavity determines the creation of folds with optimised characteristics for a stable connection: This type of section generates exact contact areas between the circular tubular element and the quadrangular tubular element, improving coupling by welding. The improvement is related to the fact that very reduced areas of the two elements are brought in contact for coupling, and that in these exact contact areas the temperature raises until the melting point of the material following to the application of electrical current. A suitable mechanical pressure determines the stable penetration and union of the two elements.

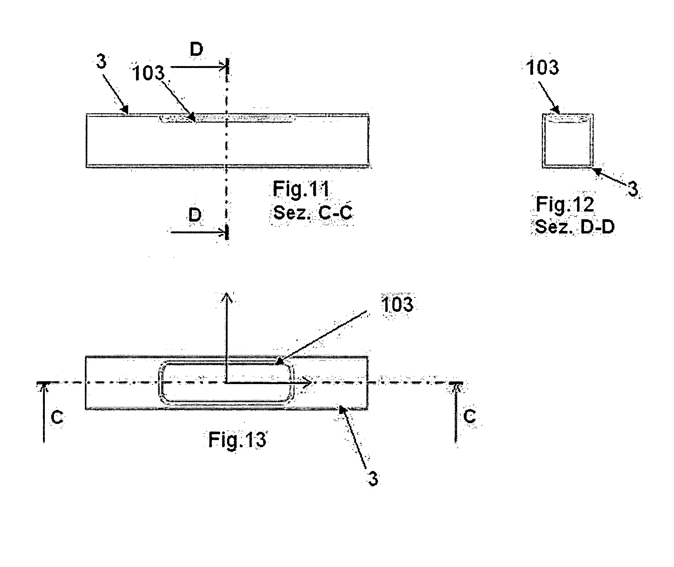

In particular, as shown in figs. 11, 12 and 13, the cavity (103) on the quadrangular tubular element (3) that forms the vertical rod is a cavity (103) with quadrangular shape that has rounded corners and a predefined preferred penetration inside the section or quadrangular tubular element (3). The cavity (103) in the quadrangular tubular element in the preferred embodiment of a tubular element with quadrangular section, with 18 mm sides and 0.8 mm walls, is obtained by means of a punch with quadrangular shape, with 13 and 27 mm sides, curved side with 100 mm radius and rounded corners with 0.5 mm radius, with penetration of 1.3 mm in the section, at the border, with the punch that generates a corresponding cavity in the tubular element with quadrangular section.

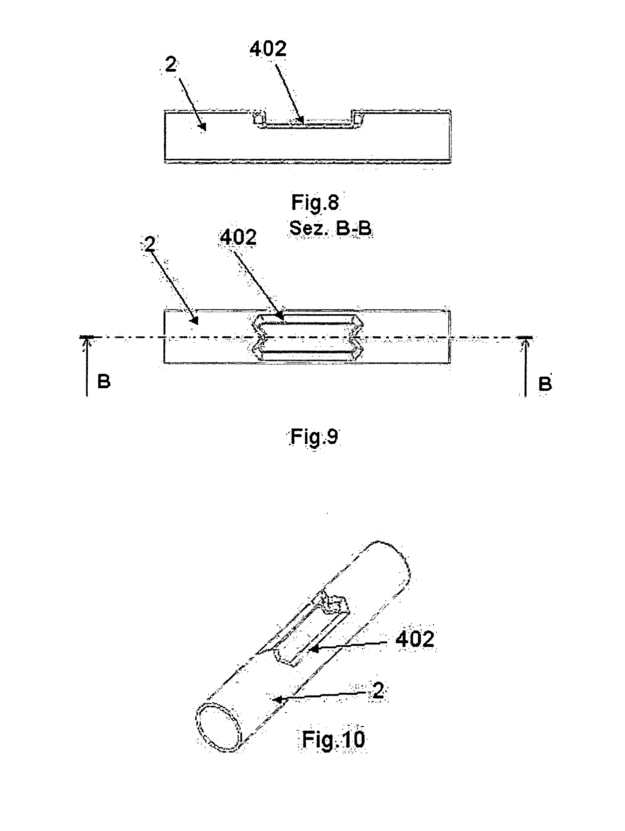

In combination, as shown in figs. 8, 9 and 10, the cavity (402) on the round tubular element that forms the retaining loop (2) is a cavity (402) shaped as an elongated rectangular polygon with four pronounced vertexes and two concave grooves on the longitudinal axis. In this case, the punch has a more complex shape, as an elongated rectangular polygon with four pronounced vertexes and two cavities grooves on the longitudinal axis.

The punch, which operates while the section is suitably housed in a cavity, determines a deformation of the material according to a curve that, approximating a parabola, allows for the best welding striking, initially having a minimum surface in contact with the opposite section and a larger area at the end of the process.

This type of cavities, when they are coupled by means of welding, as shown in figs. 3 and 4, generate four exact contact areas, with reduced surface able to ensure excellent welding and advantageously provided with the best mechanical characteristics for use.

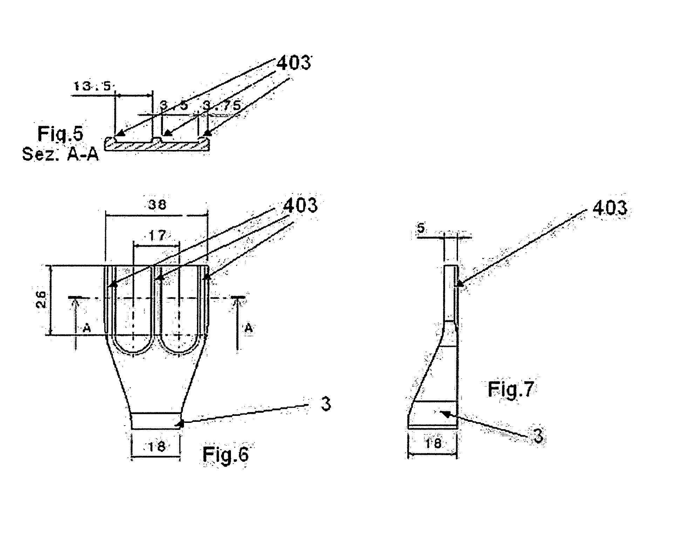

With reference to the ends of the vertical rods (3) that are suitable for coupling to the first (2') and/or last (2") loop, in order to provide the best coupling between loop and vertical rod, the end of the rod (3) is machined in such a way as to generate a contact point with six exact contact areas. With reference to figs. 5, 6 and 7, the upper and/or lower ends of the vertical rods (3) are deformed, that is to say tapered by extending and enlarging the side of the section with the cavities, in such a way the upper and/or lower end have at least one, preferably three folds (403) of materials, with the said ends being coupled with the loop (2') or (2") in first or last position, with the loop (2'), (2") being provided with corresponding cavities (402) as described above, generating a total of six exact contact areas for welding with excellent mechanical characteristics. This innovative solution is determined by the need to provide a stronger connection of the two ending loops to the structure, on which a considerable weight rests, especially in case of two or three containers stacked one on top of the other. Being in opposite position with respect to the two folds in the horizontal section, the three folds generate six welded areas, with considerably stronger connection.

In the lower loop (2'), in the intermediate areas between the connection areas with the vertical rods (3), holes are provided to engage means suitable for coupling the said crate and a pallet (11). According to a preferred embodiment, the holes are tilted by 30° with respect to a vertical axis and designed to house fixing screws for the pallet (11).

According to the preferred embodiment of the invention, as illustrated above, the best advantages are obtained with containers of about 1,000 litres, with 06 thickness and 1000x1200x1000 mm size, by means of vertical rods of a tubular element with quadrangular section, with 18 mm sides and 0.8 mm walls, in combination with a tubular element with round section that forms the retaining loop with preferably 18 mm diameter and 1 mm thickness.

The invention also relates to the assembly formed of a plastic container for fluids and protective or reinforcing crate for the said container, the said crate being externally provided on the container and fixed on a pallet, in which the protective or reinforcing crate is constructed as described above and in which the container is preferably provided with cavities designed to house the said vertical rods (3).

## Claims

1. Protective crate (1), particularly used for containers (10), comprising at least a structure similar to a crate or network structure obtained with vertical rods (3) arranged on the perimeter of the crate, in which the vertical rods perpendicularly intersect with at least one, and preferably more loops (2) used to retain the said rods (3)
**characterised by the fact that**
the said vertical rods (3) have a quadrangular section and/or the said loop/s (2) have a basically circular or rounded section.

2. Protective crate according to the preceding claim, **characterised by** the fact that the said rods (3) basically consist in sections or tubular elements with square section.

3. Protective crate according to one or more of the preceding claims, **characterised by** the fact that the retaining loop (2) is obtained by means of a section or tubular element with round section.

4. Protective crate according to one or more of the preceding claims, **characterised in that** the said crate has a basically quadrangular, square or rectangular shape.

5. Protective crate according to one or more of the preceding claims, **characterised by** the fact that the loop (2) is obtained by means of a tubular element with round section shaped as a loop or quadrangular belt.

6. Protective crate according to one or more of the preceding claims, **characterised by** the fact that the tubular element that forms the loop (2) is closed by means of plastic deformation of the connection point between the ends of the tubular element in the closing point, in particular the diameter of one of the ends (202) is reduced and inserted in the other end (102) and further blocked in place by means of mechanical constraints (302).

7. Protective crate according to one or more of the preceding claims, **characterised in that** the mechanical constraints (302) for the mutual blocking of the two ends of the said tubular element that forms the loop are at least one, preferably more than one, in particular eight cylindrical punches.

8. Protective crate according to one or more of the preceding claims, **characterised by** the fact that the connection points between vertical rods and retaining loop are obtained by means of welding, in particular resistance welding, without addition of material.

9. Protective crate according to one or more of the preceding claims, **characterised by** the fact that in the connection points the vertical rods (3) and/or retaining loops (2) are provided with cavities (103, 402) that create protruding folds of material.

10. Protective crate according to one or more of the preceding claims, **characterised by** the fact that the cavity (103) on the quadrangular tubular element that forms the vertical rod (3) is a quadrangular cavity (103) with rounded corners and a predefined preferred penetration inside the section or quadrangular tubular element.

11. Protective crate according to one or more of the preceding claims, **characterised by** the fact that the cavity (402) on the quadrangular tubular element that forms the retaining loop (2) is a cavity (103) with elongated rectangular polygonal shape with four pronounced vertexes and two concave grooves on the longitudinal axis.

12. Protective crate according to one or more of the preceding claims, **characterised by** the fact that each connection point between vertical rod (3) and horizontal loop has one, two or more, preferably four exact contact areas.

13. Protective crate according to one or more of the preceding claims, **characterised by** the fact that the upper end and/or the lower end of the vertical rods (3) are deformed, that is to say tapered, by extending and enlarging the same side of the section provided with the said cavities (103, 402) in such a way that the said upper and/or lower end have at least one, preferably three folds of material (403).

14. Protective crate according to one or more of the preceding claims, **characterised by** the fact that each connection point between vertical rod (3) and first/last horizontal loop (2) has one, two or more, preferably six exact contact areas.

15. Protective crate according to one or more of the preceding claims, **characterised by** the fact that in the lower loop (2'), in the intermediate areas between the connection areas with the vertical rods (3), holes are provided to engage means for coupling the said crate and a pallet.

16. Protective crate according to one or more of the preceding claims, **characterised by** the fact that the said engagement holes are tilted by 30° with respect to a vertical axis.

17. Protective crate according to one or more of the preceding claims, **characterised by** the fact that the said tubular element with square section that forms the vertical rods preferably has 18 mm sides and 0.8 mm walls.

18. Protective crate according to one or more of the preceding claims, **characterised by** the fact that the said tubular element with round section that forms the retaining loop preferably has a 18 mm diameter and 1 mm thickness.

19. Protective crate according to one or more of the preceding claims, **characterised by** the fact that the diameter reduction of the end of the tubular element with round section is obtained by roll forging the end itself.

20. Protective crate according to one or more of the preceding claims, **characterised by** the fact that the cavity in the quadrangular tubular element is obtained by means of a punch with quadrangular shape, with 13 and 27 mm sides, curved side with 100 mm radius and rounded corners with 0.5 mm radius, with penetration of 1.3 mm in the section, at the border, with the punch that generates a corresponding cavity in the tubular element with quadrangular section.

21. Assembly of plastic container for fluids and protective or reinforcing crate for the said container, the said crate being externally provided on the container and fixed on a pallet, **characterised by** the fact that the said retaining or reinforcing crate is obtained according to one or more claims from 1 to 20.
